# EUROPEAN PATENT SPECIFICATION

(11) **EP 4 402 620 B1**
(45) Date of publication and mention of the grant of the patent: **23.07.2025**
(21) Application number: 22768290.3
(22) Date of filing: 18.08.2022
(51) Int. Cl.: G06Q 10/06

(54) **ASSEMBLY PROCESS DOCUMENTATION SYSTEM AND METHOD**
SYSTEM UND VERFAHREN ZUR DOKUMENTATION VON ASSEMBLY-PROZESSEN
SYSTÈME ET PROCÉDÉ DE DOCUMENTATION DE PROCESSUS D'ASSEMBLAGE

(30) Priority: 16.09.2021 SE 2130243
(43) Date of publication of application: 24.07.2024
(73) Proprietor: Atlas Copco Industrial Technique AB, 105 23 Stockholm (SE)
(72) Inventor: WALLGREN, Johan, 117 32 Stockholm (SE)
(74) Representative: Atlas Copco Industrial Technique AB
(86) International application number: PCT/EP2022/073024
(87) International publication number: WO 2023/041281

(56) References cited:
- US-A1- 2020 338 679

## Description

### TECHNICAL FIELD

The present disclosure generally relates to documentation of the assembly of parts in the manufacturing industry.

### BACKGROUND

The assembly of parts of an object in the manufacturing industry may for example involve tightening nuts or screws, using power tools such as nutrunners or screwdrivers.

The assembly process may also involve attaching a decal provided with information on an object.

It may be required for the operator to document certain steps of the assembly process. The documentation may in some cases for example require taking photos of every single nut, bolt and/or screw that has been tightened, or reading the barcode or quick response (QR) code of a decal that has been attached to a part.

Current documentation methods are fully reliant on the operator. The operator may however make mistakes when documenting the assembly process. The operator may for example by accident take the picture of the wrong nut or screw when documenting the tightening of a certain nut or screw on a certain object or read the wrong barcode or QR code. The document US2020338679 A1 discloses a generic assembly process documentation system comprising an image capturing device.

### SUMMARY

Claims 1, 13 disclose the present invention.

Preferred embodiments are disclosed in claims 2-12.

An object of the present disclosure is to provide an assembly process documentation system and method which solve, or at least mitigate, problems of the prior art.

There is according to a first aspect of the present disclosure provided an assembly process documentation system comprising:
an image capturing device, and an image capturing device control system configured to: determine whether a position of the image capturing device fulfils a position condition with respect to a reference position at a manufacturing site,
and/or whether an orientation of the image capturing device fulfils an orientation condition with respect to a reference orientation at the manufacturing site, and set the image capturing device in an enabled state in case the position fulfils the position condition and/or the orientation fulfils the orientation condition.

The image capturing device will thus only be set in the enabled state in case the position and/or orientation of the image capturing device fulfils a respective predetermined condition. This reduces the risk that for example the operator accidentally takes the picture of an object other than one which was intended to be documented, or reads the wrong barcode or QR code.

The object may be a part on which an assembly operation has been performed, that is to be documented. The assembly operation may for example be a tightening operation or the attachment of a decal.

In some cases, it may be sufficient that it is determined whether the position fulfils the position condition. This may be the case when a decal is to be documented, and there is only one decal that can be photographed at a particular position taking all directions into account.

In some cases, it may be sufficient that it is determined whether the orientation fulfils the orientation condition. This may for example be the case when the position of the image capturing device is fixed or essentially fixed in space but the image capturing device can be arranged in different directions.

In some cases, it may be required to determine that both the position condition and the orientation condition are fulfilled to set the image capturing device in the enabled state. This may for example be the case if each nut of a plurality of closely arranged bolted joints is to be documented by means of the image capturing device.

With "enabled state" is meant that the image capturing device is set in a state in which it is able to capture an image that is recorded or stored for the purpose of documentation of the assembly process of an object.

The reference position may for example be the position of an object at the manufacturing site or an area or point within the manufacturing site.

The reference orientation may for example be the orientation of an object at the manufacturing site or a direction pointing towards the object, or a certain face of the object, within a predetermined range of angles.

The manufacturing site may for example be a manufacturing plant or an assembly site where an object is being assembled. An assembly site may for example a site where an object such as a wind turbine tower is being assembled and installed and may be remote from a manufacturing plant.

According to one embodiment the image capturing device control system is configured to set, or maintain, the image capturing device in a disabled state in case the position fails to fulfil the positioning condition and/or the orientation fails to fulfil the orientation condition.

According to one embodiment the assembly process documentation system is configured to determine the position of the image capturing device and/or the orientation of the image capturing device.

The position and/or orientation may for example be determined using the image capturing device. The image capturing device may for example repeatedly capture images of its surrounding, which are compared with reference images in a database to thereby determine the position and/or orientation of the image capturing device. The position and/or the orientation may for example be determined when an image or a sequences of images match with a reference image or a sequence of reference images in a database of reference images of the manufacturing plant.

This process is not to be confused with the image capturing device being in the enabled state, in which an image is captured by the image capturing device for the purpose of documentation. In this case, the image captured by the image capturing device is stored, for example in a database, and may be associated with an object or part of the assembly process.

The position may alternatively, or additionally, be determined using other known means, such as triangulation techniques based on a signal transmitted by the assembly process documentation system and/or using the global positioning system (GPS).

The orientation may alternatively, or additionally, be determined using for example an accelerometer and/or a gyroscope.

One embodiment comprises a power tool, wherein the image capturing device is mounted to or integrated with the power tool.

The orientation of the image capturing device may be the orientation of the power tool. The direction in which the image capturing device points may for example be in the direction towards which the front end of the power tool points.

The position of the image capturing device may be the position of the power tool and/or the orientation of the image capturing device may be the orientation of the power tool.

Thus, in case the image capturing device is mounted to or integrated with the power tool, the assembly process documentation system may use the position of the power tool as the position of the image capturing device and/or the orientation of the power tool as the orientation of the image capturing device.

According to one embodiment the image capturing device control system is configured to obtain the reference position and/or the reference orientation based on an identifier of the image capturing device or of the power tool.

The identifier identifies the image capturing device or the power tool. Thus, in examples where for example a power tool is used for a certain purpose, e.g. for tightening nuts or screws at a certain station or area of the manufacturing site or used for carrying out tightening operations at different stations or areas of the manufacturing site according to a certain order, the reference position and/or reference orientation may be determined based on the identifier.

According to one embodiment the image capturing device control system forms part of the power tool. The image capturing device control system may for example be arranged externally on the power tool or it may be integrated with the power tool.

Alternatively, the image capturing device control system may be arranged remotely from the power tool.

According to one embodiment the power tool is battery powered. The power tool may thus according to some examples be mobile in the sense that it is not powered via a power cord.

According to one embodiment the power tool is a nutrunner or a screwdriver.

One embodiment comprises a wireless transmitter configured to transmit an image captured by the image capturing device to an external documentation device for quality assurance.

The image may for example be a photograph or a scan of a barcode or a QR code.

According to one embodiment the wireless transmitter is configured to transmit a time stamp associated with the image to the external documentation device. The image may thus be documented together with the time stamp, i.e., the time when the image was captured.

According to one embodiment the wireless transmitter is configured to transmit an identifier of the image capturing device or of the power tool to the external documentation device.

According to one embodiment the wireless transmitter is configured to transmit the position and/or the orientation of the image capturing device when the image was captured with the image to the external documentation device.

Thus, the image may together with its time stamp, and/or position and/or orientation, and/or the identifier be stored in an external documentation device such as a database.

According to one embodiment the image capturing device is configured to automatically capture an image when set in the enabled state.

According to one embodiment the image capturing device is one of: a camera and an optical scanner such as a barcode reader or a QR code reader.

There is according to a second aspect of the present disclosure provided a method of controlling an image capturing device of an assembly process documentation system, the method comprising: a) determining whether a position of the image capturing device fulfils a position condition with respect to a reference position at a manufacturing site, and/or whether an orientation of the image capturing device fulfils an orientation condition with respect to a reference orientation at the manufacturing site, and b) setting the image capturing device in an enabled state in case the position fulfils the position condition and/or the orientation fulfils the orientation condition.

One embodiment comprises setting, or maintaining, the image capturing device in a disabled state in case the position fails to fulfil the positioning condition and/or the orientation fails to fulfil the orientation condition.

One embodiment comprises determining the position of the image capturing device and/or the orientation of the image capturing device.

One embodiment comprises obtaining the reference position and/or the reference orientation based on an identifier of the image capturing device or the power tool.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc.", unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows a block diagram of an example of an assembly process documentation system;
Fig. 2 schematically shows a perspective view of an example of a power tool comprising the assembly process documentation system in Fig. 1;
Fig. 3 is a flowchart of a method of measuring an axial force in a power tool; and
Figs 4a-4c schematically show example situations during use of the assembly process documentation system.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

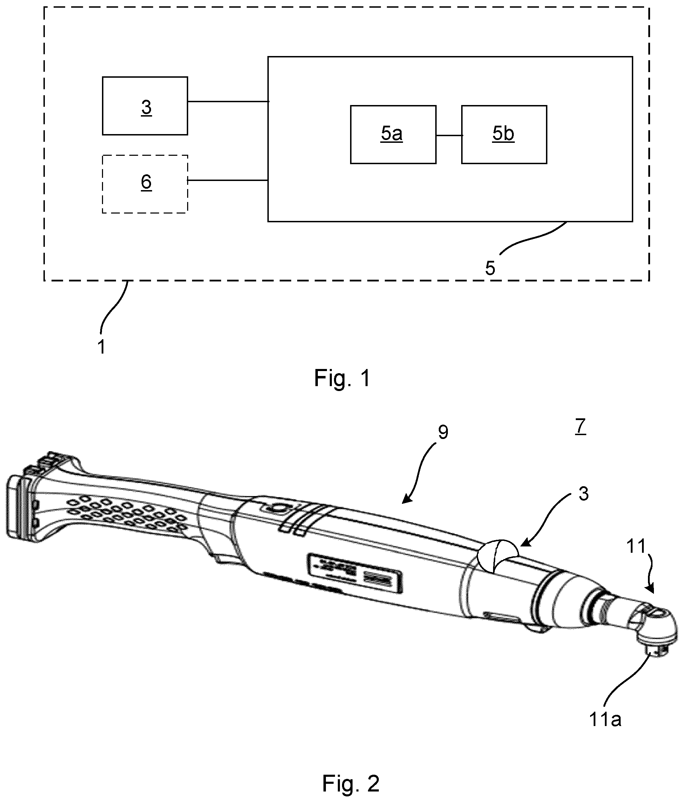

Fig. 1 shows an example of an assembly process documentation system 1.

The assembly process documentation system 1 comprises an image capturing device 3 and an image capturing device control system 5.

The image capturing device 1 and the image capturing device control system 5 may be contained in the same unit, or they may be arranged in a distributed manner in different units.

The image capturing device 3 is configured to capture an image. The image capturing device 3 may for example be a camera, a barcode reader or a QR code reader.

The image capturing device 3 may according to one example form part of a smart phone or a tablet computer. Alternatively, the image capturing device 3 may be a dedicated image capturing device 3 mounted to or integrated with a power tool.

The image capturing device 3 is configured to be switched between a disabled state and an enabled state.

In the disabled state the image capturing device 3 is unable to capture an image, or at least the assembly process documentation system 1 is unable to store an image captured by the image capturing device 3 or send an image captured by the image capturing device 3 to an external documentation device such as a database, for storage for the purpose of quality assurance.

In the enabled state the image capturing device 3 is activated to capture an image which can be stored by the assembly process documentation system 1 or sent to an external documentation device such as a database, for storage for the purpose of quality assurance.

Whether the image capturing device 3 is in the disabled state or in the enabled state depends on the position and/or orientation of the image capturing device 3 in a manufacturing plant.

Briefly, the image capturing device control system 5 is configured to determine whether the position of the image capturing device 3 fulfils a position condition relative to reference position at a manufacturing site, and/or to determine whether the orientation of the image capturing device 3 fulfils an orientation condition relative to a reference orientation at a manufacturing site.

In case the position fulfils the position condition, the image capturing device control system 3 may set the image capturing device 1 in the enabled state from the disabled state.

Alternatively, or additionally, in case the orientation fulfils the orientation condition, the image capturing device control system 3 may set the image capturing device 1 in the enabled state from the disabled state.

The position condition may for example be that the position of the image capturing device 3 has to be within a predetermined distance from an object or point located at the manufacturing site or that the position of the image capturing device 3 has to be within a predetermined area at the manufacturing site.

The orientation condition may for example be that the image capturing device 3 has to be directed towards the object within a certain range of angles in space, for example within a cone. The orientation of the object determines the angles. The maximum angles of the cone may be predetermined.

The image capturing device control system 5 comprises a storage medium 5a comprising computer code, and processing circuitry 5b configured to execute the computer code, causing the assembly process documentation system 1 to perform the method(s) as disclosed herein.

The storage medium 5a may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

The processing circuitry 5b may for example use any combination of one or more of a suitable central processing unit (CPU), multiprocessor, microcontroller, digital processor (DSP), application specific integrated circuit (ASIC), field programmable gate arrays (FPGA) etc.

The image capturing device 3 may for example be arranged on or be integrated with a power tool. The image capturing device control system 5 may according to some examples be arranged on or be integrated with the same power tool as the image capturing device 3. Alternatively, only the image capturing device 3 may be arranged on or be integrated with the power tool and the image capturing device control system 5 may be arranged remotely from the power tool.

The assembly process documentation system 1 may comprise a wireless transmitter 6 configured to wirelessly transmit data from the assembly process documentation system 1 to an external documentation device. This data may for example comprise an image captured by the image capturing device 3, a time stamp associated with the captured image, an identifier of the image capturing device, the position, and/or the orientation of the image capturing device 3.

Fig. 2 shows an example of a power tool 7, which in this example is a nutrunner but could alternatively be a screw driver for instance.

The power tool 7 may be cordless and battery driven, or it may be powered via a cord.

The power tool 7 has a main body 9 and a tool head 11. The tool head 11 is attached to the main body 9. The tool head 11 is in the example angled but could alternatively be straight.

The tool head 11 has an output shaft 11a. The output shaft 11a is configured to be rotatably driven and engage with a fastener such as a nut, a bolt, or a screw.

As shown in Fig. 2, the image capturing device 3 may be provided on the power tool 7. Thus, the image capturing device 3 may be used for capturing images or scanning images in conjunction with a tightening or assembly operation.

The orientation of the image capturing device 3 may for example be defined by the direction in which the tool head 11 is pointing, for instance along the longitudinal axis of the power tool 7.

The image capturing device control system 5 may be provided in or on the power tool 7 or arranged remotely with respect to the power tool 7.

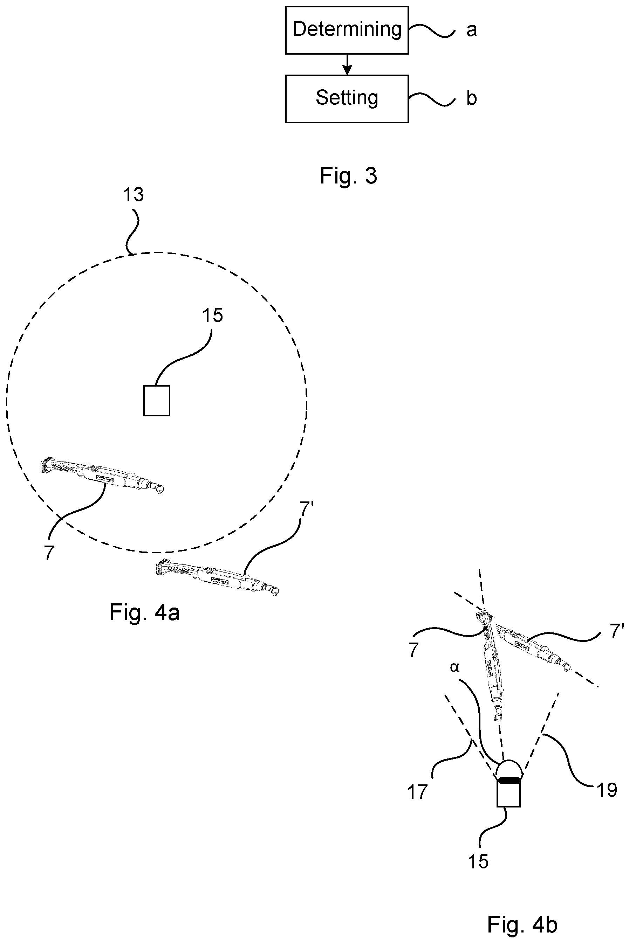

A method of controlling the image capturing device 3 by means of the image capturing device control system 5 for the purpose of documentation of an assembly process will now be described with reference to Fig. 3 and Figs 4a-4c.

In a step a) it is determined whether a position of the image capturing device 3 fulfils the position condition, and/or whether an orientation of the image capturing device 3 fulfils the orientation condition.

Fig. 4a depicts a simplified two-dimensional situation where the power tool 7 is arranged within a predetermined distance from a reference position which in this example is the centre of an object 15 located at the manufacturing site. The predefined distance is illustrated by the circle 13 centred on the reference position. The circle 13 has a predefined radius and corresponds to the position condition in this example. Thus, since the power tool 7 is within the circle 13 it fulfils the position condition. The power tool 7', which is of the same type as the power tool 7, is outside the circle 13 and thus fails to fulfil the position condition.

Fig. 4b depicts a situation where the power tool 7 is arranged with a first orientation relative to the object 15 in the manufacturing plant. The power tool 7' is arranged with a second orientation relative to the object 15. In this two-dimensional example, there is a triangular region delimited by the two dashed lines 17 and 19, which emanate from the object 15, with a predefined angle α between them. Straight lines emanating from the object 15 between the dashed lines 17 and 19, which do not intersect the dashed lines, define a set of reference orientations in this example. Thus, in case a power tool has an orientation which is aligned with such a straight line, the orientation fulfils the orientation condition. In this example, the first orientation of the power tool 7 fulfils the orientation condition. The power tool 7', which is of the same type as the power tool 7 and which is rotated about its rear end which coincides with the rear end of the power tool 7, has the second orientation which fails to fulfil the orientation condition.

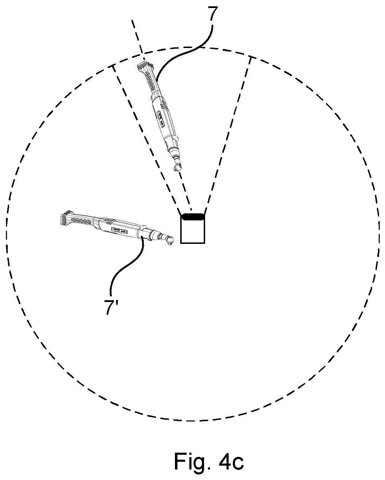

Fig. 4c illustrates a situation where the power tool 7 fulfils both the position condition and the orientation condition. The power tool 7' only fulfils the position condition.

Whether only one, and in this case which one, or both of the position condition and the orientation have to be fulfilled to enable the image capturing device 3, may be predetermined and may for example depend on the application.

Prior to step a), the image capturing device control system 5 may be configured to determine the position and/or the orientation of the image capturing device 3. Alternatively, another device may be configured to determine the position and/or the orientation of the image capturing device 3 and provide it to the image capturing device control system 5.

The image capturing device control system 5 may be configured to obtain the reference position and/or the reference orientation based on an identifier of the image capturing device 3 or of the power tool 7 and/or based on the position and/or orientation of the image capturing device 3. The reference position and/or reference orientation may for example be determined by checking at which location or station at the manufacturing site the image capturing device or power tool 7 should be at the moment using its identifier, based for example on an assembly schedule that may be associated with the power tool 7. It may for example be found that the image capturing device 3 or power tool 7 should be at a specific location at a specific station based on the assembly schedule. Alternatively, using the position of the image capturing device 3 or of the power tool 7, the position of an object in proximity of the image capturing device 3 may be selected as the reference position.

In a step b) the image capturing device 3 is set in an enabled state in case the position fulfils the position condition and/or the orientation fulfils the orientation condition.

The user is only able to capture and store an image when the image capturing device 3 is in the enabled state.

In case the position fails to fulfil the positioning condition and/or the orientation fails to fulfil the orientation condition the image capturing device control system 5 is configured to set, or maintain, the image capturing device 3 in the disabled state. In this case, the user is not able to take any images, or at least they are not stored internally or externally to the assembly process documentation system 1 for the purpose of quality assurance.

When an image has been captured, the wireless transmitter 6 may transmit the image captured to an external documentation device for quality assurance.

The wireless transmitter 6 may be configured to transmit a time stamp associated with this image to the external documentation device.

The wireless transmitter 6 may be configured to transmit an identifier of the image capturing device 3 or of the power tool 7 to the external documentation device together with the image.

The wireless transmitter 6 may be configured to transmit the position and/or the orientation of the image capturing device 3 at the time when the image was captured 3 captured the image, to the external documentation device.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. An assembly process documentation system (1) comprising:
- an image capturing device (3), and
- an image capturing device control system (5),
wherein the assembly process documentation system (1) is configured to determine a position of the image capturing device (3) and/or an orientation of the image capturing device (3),
wherein the image capturing device control system (5) is configured to:
determine whether the determined position of the image capturing device (3) fulfils a position condition with respect to a reference position at a manufacturing site, and/or whether the determined orientation of the image capturing device (3) fulfils an orientation condition with respect to a reference orientation at the manufacturing site, and
set the image capturing device (3) in an enabled state in case the position fulfils the position condition and/or the orientation fulfils the orientation condition, whereby the image capturing device being in the disabled state or in the enabled state depends on the position and/or orientation of the image capturing device in the manufacturing site.

2. The assembly process documentation system (1) as claimed in claim 1, wherein the image capturing device control system (5) is configured to set, or maintain, the image capturing device (3) in a disabled state in case the position fails to fulfil the positioning condition and/or the orientation fails to fulfil the orientation condition.

3. The assembly process documentation system (1) as claimed in any of the preceding claims, comprising a power tool (7, 7'), wherein the image capturing device (3) is mounted to or integrated with the power tool (7, 7').

4. The assembly process documentation system (1) as claimed in claim 3, wherein the image capturing device control system (5) forms part of the power tool (7, 7').

5. The assembly process documentation system (1) as claimed in claim 3 or 4, wherein the power tool (7, 7') is battery powered.

6. The assembly process documentation system (1) as claimed in any of claims 3-5, wherein the power tool (7, 7') is a nutrunner or a screwdriver.

7. The assembly process documentation system (1) as claimed in any of the preceding claims, comprising a wireless transmitter configured to transmit an image captured by the image capturing device (1) to an external documentation device for quality assurance.

8. The assembly process documentation system (1) as claimed in claim 7, wherein the wireless transmitter is configured to transmit a time stamp associated with the image to the external documentation device.

9. The assembly process documentation system (1) as claimed in claim 7 or 8 dependent of any of claims 3-6, wherein the wireless transmitter is configured to transmit an identifier of the image capturing device (3) or of the power tool (7, 7') to the external documentation device.

10. The assembly process documentation system as claimed in any of claims 7-9, wherein the wireless transmitter is configured to transmit the position and/or the orientation of the image capturing device (3) when the image was captured with the image to the external documentation device.

11. The assembly process documentation system (1) as claimed in any of the preceding claims, wherein the image capturing device (3) is configured to automatically capture an image when set in the enabled state.

12. The assembly process documentation system (1) as claimed in any of the preceding claims, wherein the image capturing device (3) is one of: a camera and an optical scanner such as a barcode reader or a QR code reader.

13. A method of controlling an image capturing device (3) of an assembly process documentation system (1), the method comprising:
determining a position of the image capturing device and/or the orientation of the image capturing device,
determining whether the determined position of the image capturing device (3) fulfils a position condition with respect to a reference position at a manufacturing site, and/or whether the determined orientation of the image capturing device (3) fulfils an orientation condition with respect to an reference orientation, and
setting the image capturing device (3) in an enabled state in case the position fulfils the position condition and/or the orientation fulfils the orientation condition, whereby the image capturing device being in the disabled state or in the enabled state depends on the position and/or orientation of the image capturing device in the manufacturing site.

## Patentansprüche

1. System zur Dokumentation von Montageprozessen (1), umfassend:
- eine Bilderfassungsvorrichtung (3) und
- ein Bilderfassungsvorrichtungssteuersystem (5),
wobei das System zur Dokumentation von Montageprozessen (1) konfiguriert ist, um eine Position der Bilderfassungsvorrichtung (3) und/oder eine Ausrichtung der Bilderfassungsvorrichtung (3) zu bestimmen,
wobei das Bilderfassungsvorrichtungssteuersystem (5) konfiguriert ist zum:
Bestimmen, ob die bestimmte Position der Bilderfassungsvorrichtung (3) eine Positionsbedingung in Bezug auf eine Referenzposition an einem Fertigungsort erfüllt und/oder ob die bestimmte Ausrichtung der Bilderfassungsvorrichtung (3) eine Ausrichtungsbedingung in Bezug auf eine Referenzausrichtung am Fertigungsort erfüllt, und
Einstellen der Bilderfassungsvorrichtung (3) auf einen aktivierten Zustand, wenn die Position die Positionsbedingung erfüllt und/oder die Ausrichtung die Ausrichtungsbedingung erfüllt, wobei es von der Position und/oder Ausrichtung der Bilderfassungsvorrichtung am Fertigungsort abhängt, ob sich die Bilderfassungsvorrichtung im deaktivierten Zustand oder im aktivierten Zustand befindet.

2. System zur Dokumentation von Montageprozessen (1) nach Anspruch 1, wobei das Bilderfassungsvorrichtungssteuersystem (5) konfiguriert ist, um die Bilderfassungsvorrichtung (3) auf einen deaktivierten Zustand einzustellen oder in diesem zu halten, wenn die Position die Positionierungsbedingung nicht erfüllt und/oder die Ausrichtung die Ausrichtungsbedingung nicht erfüllt.

3. System zur Dokumentation von Montageprozessen (1) nach einem der vorstehenden Ansprüche, umfassend ein Elektrowerkzeug (7, 7'), wobei die Bilderfassungsvorrichtung (3) an dem Elektrowerkzeug (7, 7') angebracht oder in dieses integriert ist.

4. System zur Dokumentation von Montageprozessen (1) nach Anspruch 3, wobei das Bilderfassungsvorrichtungssteuersystem (5) einen Teil des Elektrowerkzeugs (7, 7') bildet.

5. System zur Dokumentation von Montageprozessen (1) nach Anspruch 3 oder 4, wobei das Elektrowerkzeug (7, 7') batteriebetrieben ist.

6. System zur Dokumentation von Montageprozessen (1) nach einem der Ansprüche 3 bis 5, wobei das Elektrowerkzeug (7, 7') eine Mutternanziehmaschine oder ein Schraubendreher ist.

7. System zur Dokumentation von Montageprozessen (1) nach einem der vorstehenden Ansprüche, umfassend einen drahtlosen Sender, der konfiguriert ist, um ein von der Bilderfassungsvorrichtung (1) erfasstes Bild zur Qualitätssicherung an eine externe Dokumentationsvorrichtung zu übertragen.

8. System zur Dokumentation von Montageprozessen (1) nach Anspruch 7, wobei der drahtlose Sender konfiguriert ist, um einen dem Bild zugeordneten Zeitstempel an die externe Dokumentationsvorrichtung zu übertragen.

9. System zur Dokumentation von Montageprozessen (1) nach Anspruch 7 oder 8, abhängig von einem der Ansprüche 3 bis 6, wobei der drahtlose Sender konfiguriert ist, um eine Kennung der Bilderfassungsvorrichtung (3) oder des Elektrowerkzeugs (7, 7') an die externe Dokumentationsvorrichtung zu übertragen.

10. System zur Dokumentation von Montageprozessen nach einem der Ansprüche 7 bis 9, wobei der drahtlose Sender konfiguriert ist, um die Position und/oder die Ausrichtung der Bilderfassungsvorrichtung (3) zum Zeitpunkt der Bilderfassung mit dem Bild an die externe Dokumentationsvorrichtung zu übertragen.

11. System zur Dokumentation von Montageprozessen (1) nach einem der vorstehenden Ansprüche, wobei die Bilderfassungsvorrichtung (3) konfiguriert ist, um automatisch ein Bild zu erfassen, wenn sie auf den aktivierten Zustand eingestellt ist.

12. System zur Dokumentation von Montageprozessen (1) nach einem der vorstehenden Ansprüche, wobei die Bilderfassungsvorrichtung (3) eines ist von: einer Kamera und einem optischen Scanner, wie einem Barcode-Lesegerät oder einem QR-Code-Lesegerät.

13. Verfahren zum Steuern einer Bilderfassungsvorrichtung (3) eines Systems zur Dokumentation von Montageprozessen (1), wobei das Verfahren umfasst:
Bestimmen einer Position der Bilderfassungsvorrichtung und/oder der Ausrichtung der Bilderfassungsvorrichtung,
Bestimmen, ob die bestimmte Position der Bilderfassungsvorrichtung (3) eine Positionsbedingung in Bezug auf eine Referenzposition an einem Fertigungsort erfüllt und/oder ob die bestimmte Ausrichtung der Bilderfassungsvorrichtung (3) eine Ausrichtungsbedingung in Bezug auf eine Referenzausrichtung erfüllt, und
Einstellen der Bilderfassungsvorrichtung (3) auf einen aktivierten Zustand, wenn die Position die Positionsbedingung erfüllt und/oder die Ausrichtung die Ausrichtungsbedingung erfüllt, wobei es von der Position und/oder Ausrichtung der Bilderfassungsvorrichtung am Fertigungsort abhängt, ob sich die Bilderfassungsvorrichtung im deaktivierten oder im aktivierten Zustand befindet.

## Revendications

1. Système de documentation de processus d'assemblage (1) comprenant :
- un dispositif de capture d'image (3), et
- un système de commande de dispositif de capture d'image (5),
dans lequel le système de documentation de processus d'assemblage (1) est configuré pour déterminer une position du dispositif de capture d'image (3) et/ou une orientation du dispositif de capture d'image (3),
dans lequel le système de commande de dispositif de capture d'image (5) est configuré pour :
déterminer si la position déterminée du dispositif de capture d'image (3) remplit une condition de position par rapport à une position de référence sur un site de fabrication, et/ou si l'orientation déterminée du dispositif de capture d'image (3) remplit une condition d'orientation par rapport à une orientation de référence sur le site de fabrication, et
mettre le dispositif de capture d'image (3) dans un état activé dans le cas où la position remplit la condition de position et/ou l'orientation remplit la condition d'orientation, moyennant quoi le dispositif de capture d'image se trouvant dans l'état désactivé ou dans l'état activé dépend de la position et/ou de l'orientation du dispositif de capture d'image dans le site de fabrication.

2. Système de documentation de processus d'assemblage (1) selon la revendication 1, dans lequel le système de commande de dispositif de capture d'image (5) est configuré pour mettre, ou maintenir, le dispositif de capture d'image (3) dans un état désactivé dans le cas où la position ne remplit pas la condition de positionnement et/ou l'orientation ne remplit pas la condition d'orientation.

3. Système de documentation de processus d'assemblage (1) selon l'une quelconque des revendications précédentes, comprenant un outil électrique (7, 7'), dans lequel le dispositif de capture d'image (3) est monté sur l'outil électrique (7, 7') ou intégré à celui-ci.

4. Système de documentation de processus d'assemblage (1) selon la revendication 3, dans lequel le système de commande de dispositif de capture d'image (5) fait partie de l'outil électrique (7, 7').

5. Système de documentation de processus d'assemblage (1) selon la revendication 3 ou 4, dans lequel l'outil électrique (7, 7') est alimenté par batterie.

6. Système de documentation de processus d'assemblage (1) selon l'une quelconque des revendications 3 à 5, dans lequel l'outil électrique (7, 7') est une serreuse ou un tournevis.

7. Système de documentation de processus d'assemblage (1) selon l'une quelconque des revendications précédentes, comprenant un transmetteur sans fil configuré pour transmettre une image capturée par le dispositif de capture d'image (1) à un dispositif de documentation externe pour une assurance qualité.

8. Système de documentation de processus d'assemblage (1) selon la revendication 7, dans lequel le transmetteur sans fil est configuré pour transmettre une estampille temporelle associée à l'image au dispositif de documentation externe.

9. Système de documentation de processus d'assemblage (1) selon la revendication 7 ou 8 dépendant de l'une quelconque des revendications 3 à 6, dans lequel le transmetteur sans fil est configuré pour transmettre un identifiant du dispositif de capture d'image (3) ou de l'outil électrique (7, 7') au dispositif de documentation externe.

10. Système de documentation de processus d'assemblage selon l'une quelconque des revendications 7 à 9, dans lequel le transmetteur sans fil est configuré pour transmettre la position et/ou l'orientation du dispositif de capture d'image (3) lorsque l'image a été capturée avec l'image au dispositif de documentation externe.

11. Système de documentation de processus d'assemblage (1) selon l'une quelconque des revendications précédentes, dans lequel le dispositif de capture d'image (3) est configuré pour capturer automatiquement une image lorsqu'il est mis dans l'état activé.

12. Système de documentation de processus d'assemblage (1) selon l'une quelconque des revendications précédentes, dans lequel le dispositif de capture d'image (3) est l'un parmi : une caméra et un lecteur optique tel qu'un lecteur de code-barres ou un lecteur de code QR.

13. Procédé de commande d'un dispositif de capture d'image (3) d'un système de documentation de processus d'assemblage (1), comprenant :
la détermination d'une position du dispositif de capture d'image et/ou de l'orientation du dispositif de capture d'image,
le fait de déterminer si la position déterminée du dispositif de capture d'image (3) remplit une condition de position par rapport à une position de référence sur un site de fabrication, et/ou si l'orientation déterminée du dispositif de capture d'image (3) remplit une condition d'orientation par rapport à une orientation de référence, et
le fait de mettre le dispositif de capture d'image (3) dans un état activé dans le cas où la position remplit la condition de position et/ou l'orientation remplit la condition d'orientation, moyennant quoi le dispositif de capture d'image se trouvant dans l'état désactivé ou dans l'état activé dépend de la position et/ou de l'orientation du dispositif de capture d'image sur le site de fabrication.
